Europäisches Patentamt

European Patent Office

Office européen des brevets

(19)

(11) Veröffentlichungsnummer: **0 019 828**
**A1**

(12) # EUROPÄISCHE PATENTANMELDUNG

(21) Anmeldenummer: **80102760.8**

(22) Anmeldetag: **19.05.80**

(51) Int. Cl.³: **B 01 L 7/00,** G 01 N 31/08

(30) Priorität: **25.05.79 DE 2921358**

(43) Veröffentlichungstag der Anmeldung: **10.12.80**
**Patentblatt 80/25**

(84) Benannte Vertragsstaaten: **AT CH FR GB IT LI**

(71) Anmelder: **SIEMENS AKTIENGESELLSCHAFT Berlin und München, Postfach 22 02 61,**
**D-8000 München 22 (DE)**

(72) Erfinder: **Müller, Friedhelm, Ing. grad.,**
**Rudolf-Diesel-Strasse 31,**
**D-7515 Linkenheim-Hochstetten 1 (DE)**

(54) **Luftthermostat für die Gaschromatographie.**

(57) Luftthermostat für die Gaschromatographie mit einem Gehäuse mit wärmeisolierenden Wänden, in welchem sich die analytischen Aggregate (4), wie Trennsäulen, Trennsäulen-Schalteinrichtungen, Teile von Injektoren, Detektoren und Umschaltventilen sowie Heiz- und Luftumwälz-Vorrichtungen befinden.

Die analytischen Aggregate sind fest, aber auswechselbar in oder an der oberen Stirnfläche (2) des Gehäuses angebracht; der aus den Seitenflächen des Gehäuses gebildete Gehäusemantel (9) ist teleskopartig über einen Sockel (5) absenkbar, so daß die analytischen Aggregate zur Wartung oder zur Auswechslung der Trennsäulen gut zugänglich sind.

ACTORUM AG

0019828

SIEMENS AKTIENGESELLSCHAFT       Unser Zeichen
Berlin und München               VPA 79 P 3 5 2 0 EUR

Luftthermostat für die Gaschromatographie

Die Erfindung bezieht sich auf einen Luftthermostaten für die Gaschromatographie mit einem isolierenden Gehäuse, in welchem sich die analytischen Aggregate, wie Trennsäulen, Trennsäulen-Schalteinrichtungen, Teile von Injektoren, Detektoren, Umschaltventile sowie Heiz- und Luftumwälz-Vorrichtungen befinden.

Die analytischen Aggregate eines Gaschromatographen müssen bekanntlich hochkonstant thermostatisiert werden. Zu diesem Zwecke werden insbesondere Trennsäulen und weitere Teile in einem isolierenden Gehäuse angeordnet, dessen Innenraum mit Hilfe regelbarer Heiz- und Luftumwälz-Vorrichtungen auf einer vorgegebenen Temperatur gehalten wird.

Da insbesondere in der Labor-Gaschromatographie Trennsäulen häufig gewechselt werden müssen, ist eine gute Zugänglichkeit der analytischen Aggregate notwendig, insbesondere bei empfindlichen Glaskapillarsäulen und Trennsäulenschaltungen.

Sp 4 Scl / 21.05.1979

- 2 -

Bekannte Thermostaten sind deshalb nach Art eines Wärmeschranks mit einer türartig ausschwenkbaren Seitenfläche
aufgebaut, die analytischen Aggregate mit ihren elektrischen und pneumatischen Anschlüssen sind fest in dem
Schrank angeordnet und mit externen Systemen, beispielsweise einem dem Gaschromatographen nachgeschalteten
Massenspektrometer einfach zu koppeln. Nachteilig an
dieser Anordnung ist die schlechte Zugänglichkeit durch
die Türöffnung. Beim Wechseln von Aggregatteilen nach
vorhergegangenem Betrieb besteht außerdem die Gefahr
von Verbrennungen für die Bedienungsperson.

Um die Zugänglichkeit zu verbessern, wurden bei einer
anderen bekannten Ausführung die analytischen Aggregate
in bzw. an dem an einer Säule geführten und nach oben
von dem Gehäuse abhebbaren Gehäusedeckel angeordnet.
Bei hochgefahrenem Deckel waren die Aggregate zwar gut
zugänglich, es bestand auch keine Verbrennungsgefahr,
die elektrischen und pneumatischen Anschluß- und Versorgungsleitungen mußten jedoch flexibel und entsprechend
lang ausgeführt werden, was die Kopplungsmöglichkeit mit
externen Systemen, die kurze und beheizbare Verbindungsleitungen verlangen, erheblich einschränkte. Ein weiterer Nachteil war darin zu sehen, daß bei der Bewegung
der Aggregate eine Dejustierung empfindlicher Meßsysteme
auftreten konnte.

Es besteht somit die Aufgabe, einen Thermostaten für
die Gaschromatographie zu entwickeln, der die Nachteile
der bekannten Ausführungen nicht aufweist.

Eine Lösung der Aufgabe wird in einem Luftthermostat
der eingangs genannten Art gesehen, der dadurch gekennzeichnet ist, daß der aus den Seitenflächen gebildete
und die in fester Position angeordneten analytischen
Aggregate umgebende Gehäusemantel parallel zur Gehäuselängsachse verschiebbar ist.

- 3 -

In einer bevorzugten Ausführungsform sind die analytischen Aggregate in oder an dem eine Stirnfläche des Gehäuses bildenden Oberteil des Thermostaten angebracht, und der sie umgebende Gehäusemantel ist über einen die untere Stirnfläche des Gehäuses sowie die Heiz- und Luftumwälz-Einrichtungen tragenden Sockel teleskopartig absenkbar.

Bei den erfindungsgemäß ausgebildeten Thermostaten sind somit die analytischen Aggregate stationär in dem sämtliche Anschlüsse mit kurzen pneumatischen und elektrischen Leitungen enthaltenden Oberteil von mehreren Seiten gut zugänglich angeordnet. Der Anschluß externer Systeme bereitet keine Schwierigkeiten.

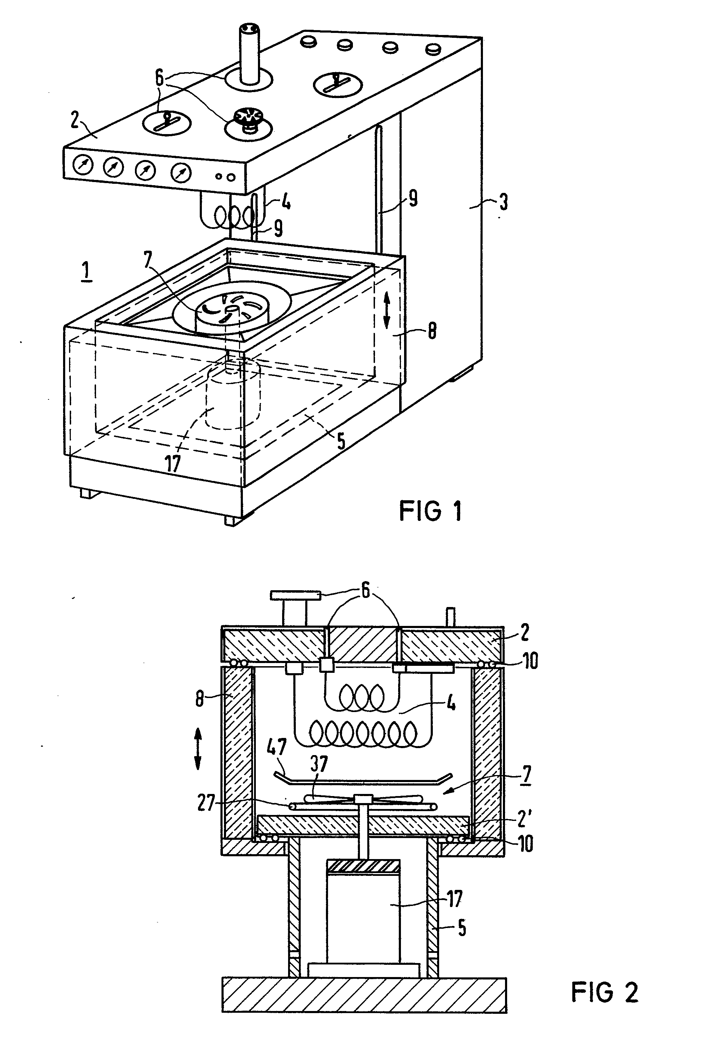

Zur Erläuterung der Erfindung sind in den Figuren 1 und 2 ein Ausführungsbeispiel schematisch dargestellt und im folgenden beschrieben.

Der in <u>Figur 1</u> in geöffnetem Zustand dargestellte Luftthermostat weist ein quaderförmiges Gehäuse 1 mit wärmeisolierenden Wänden auf, dessen obere Stirnfläche von einem fest mit einer außerhalb des Gehäuses befindlichen Konsole 3 verbundenen Oberteil 2 gebildet wird. In dem Oberteil 2 sind gut zugänglich die analytischen Aggregate 4, wie Trennsäulen, und die hier der Übersichtlichkeit halber nicht eingezeichneten Injektoren, Detektoren, Umschaltventile sowie andere zum Betrieb der analytischen Aggregate notwendigen Hilfseinrichtungen, wie Anschlüsse, Bedienungs- und Kontrollelemente 6, angeordnet. Ein Sockel 5 enthält einen Antriebsmotor 17 für eine regelbare Heiz- und Luftumwälzvorrichtung 7, die sich oberhalb der den Sockelabschluß bildenden, isolierenden Bodenfläche 2' des Gehäuses 1 befindet.

- 4 -

Der aus den Seitenflächen des Thermostatengehäuses 1 bestehende Gehäusemantel 8 läßt sich teleskopartig über den Sockel 5 absenken und, nach Durchführung der Arbeiten an den analytischen Aggregaten 4, aus der gezeichneten Stellung wieder nach oben bewegen und sowohl gegen die Bodenfläche 2' wie auch gegen das Oberteil 2 wärmedicht verschließen. Der Hubantrieb des an den Schienen 9 geführten Gehäusemantels 8 erfolgt mit Hilfe eines hier nicht dargestellten Elektromotors in der Konsole 3.

Figur 2 zeigt einen Längsschnitt durch den Thermostaten nach Figur 1 in geschlossener Stellung. Gleiche Teile tragen gleiche Bezugszeichen.

In den Trennfugen zwischen Gehäusemantel 8 und der oberen Stirnfläche im Oberteil 2 bzw. der Bodenfläche 2' des Gehäuses 1 sind wärmeisolierende Dichtungen 10 vorgesehen.

Der Sockel 5 ist so bemessen, daß der Gehäusemantel 8 beim Öffnen des Thermostaten darüber gleiten kann. Wie zu erkennen ist, befindet sich der Antriebsmotor 17 für die Heiz- und Luftumwälz-Vorrichtung 7, die aus Heizschlange 27, Gebläse 37 und Luftleitblech 47 besteht, in kühler Umgebung außerhalb des Thermostatengehäuses 1.

0019828

## Patentansprüche

1. Luftthermostat für die Gaschromatographie mit einem Gehäuse mit isolierenden Wänden, in welchem sich die analytischen Aggregate, wie Trennsäulen, Trennsäulen-Schalteinrichtungen, Teile von Injektoren, Detektoren und Umschaltventilen sowie Heiz- und Luftumwälz-Vorrichtungen befinden, d a d u r c h g e k e n n z e i c h - n e t , daß der aus den Seitenflächen des Gehäuses (1) gebildete und die in fester Position angeordneten analytischen Aggregate (4) umgebende Gehäusemantel (8) parallel zur Gehäuselängsachse verschiebbar ist.

2. Luftthermostat nach Anspruch 1, d a d u r c h g e k e n n z e i c h n e t , daß die analytischen Aggregate (4) in oder an dem eine Stirnfläche des Gehäuses (1) bildenden Oberteil (2) des Thermostaten angeordnet sind und daß der sie umgebende Gehäusemantel (8) über einen, die Bodenfläche (2') des Gehäuses sowie die Heiz- und Luftumwälz-Vorrichtungen (7, 17) tragenden Sockel (5) teleskopartig absenkbar ist.

0019828

79 P 3520      1/1

FIG 1

FIG 2

Europäisches Patentamt

# EUROPÄISCHER RECHERCHENBERICHT

0019828

Nummer der Anmeldung

EP 80 10 2760

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>DE - C - 199 093</u> (SPRENGER)<br><br>* Das ganze Dokument *<br><br>--- | 1,2 |
| | <u>DE - C - 199 094</u> (SPRENGER)<br><br>* Das ganze Dokument *<br><br>--- | 1,2 |
| | <u>US - A - 3 363 447</u> (SEVERS)<br><br>* Spalte 4, Zeile 47 bis Spalte 5, Zeile 3 *<br><br>--- | 1 |
| A | <u>US - A - 3 403 545</u> (CARTER) | 1 |
| A | SIEMENS ZEITSCHRIFT, Band 45, Heft 10, 1971<br>W. BEINGE et al.: "L350, ein neuer Labor-Gas-Chromatograph", Seiten 662-664<br><br>* Bild 2 * | 1 |
| A | <u>US - A - 3 212 319</u> (LEVY-GAGLE)<br><br>* Spalte 3, Zeilen 33-48 * | 1 |

----------

KLASSIFIKATION DER ANMELDUNG (Int. Cl.3)

B 01 L 7/00
G 01 N 31/08

RECHERCHIERTE SACHGEBIETE (Int. Cl.3)

B 01 L
G 01 N
F 27 B

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 28. August 1980 | LAMMINEUR |

EPA form 1503.1 06.78